# EUROPEAN PATENT SPECIFICATION

(11) **EP 2 489 581 B1**
(45) Date of publication and mention of the grant of the patent: **04.09.2013**
(21) Application number: 12153435.8
(22) Date of filing: 01.02.2012
(51) Int. Cl.: B62J 17/04

(54) **Screen attachment structure for saddle riding type vehicle**
Windschutzscheibebefestigungsanordnung für ein Sattelfahrzeug
Dispositif de montage de pare-brise pour véhicule de type à enfourcher

(30) Priority: 19.02.2011 JP 2011034042
(43) Date of publication of application: 22.08.2012
(73) Proprietor: Honda Motor Co., Ltd., Tokyo 107-8556 (JP)
(72) Inventor: Nakagome, Hiroshi, Wako-shi, Saitama 351-0193 (JP); Hojo, Masayuki, Wako-shi, Saitama 351-0193 (JP)
(74) Representative: Stevens, Jason Paul

(56) References cited:
- EP-A1- 1 642 811
- EP-A2- 1 398 256
- JP-A- 2009 073 269
- JP-U- 63 160 289

## Description

The present invention relates to a screen attachment structure for a saddle riding type vehicle, and more particularly to a structure in which the attachment position of a screen is adjustable by simple adjustment means.

Documents EP-A-1 398 256 shows a screen attachment structure according to the preamble of claim 1.

A structure in which a screen is attached to a vehicle body using angle adjustment stays, which allows the attachment angle of the screen to be freely adjusted by changing the direction of the angle adjustment stays, is known from Japanese Patent Application Publication No. 2006-096294. This document discloses, as a conventional example, a motorcycle screen attachment structure in which a screen is attached to angle adjustment stays. The angle adjustment stays are each fastened to a screen attachment bracket on the vehicle body side via two (that is, upper and lower) through holes. The angle adjustment stays can be attached upside down, and allow selection of the position of the screen by the attachment direction of the angle adjustment stays. With this structure, the position of the screen is made adjustable while the fastening holes of the screen attachment brackets are hidden.

In this known structure, the angle adjustment stays have to be somewhat larger in size because the angle adjustment stays include not only a height adjustment function but also an angle adjustment function. In addition, since the angle adjustment stays have to adopt a structure allowing the angle adjustment of the screen, the degree of freedom in design is reduced. Moreover, some of the attachment holes are elongated holes, and the elongated holes are externally visible.

In this respect, the present invention, at least in its preferred embodiments, aims to allow a screen to be attached to a vehicle body in an attachment-position-adjustable manner with attachment holes on the vehicle body side hidden but without a reduction in the degree of freedom in design.

According to a first aspect of the invention, there is provided a screen attachment structure for a saddle riding type vehicle, comprising: a screen of a windshield system attached to a front portion of a vehicle body and provided with a bolt through hole; a screen stay attached to the vehicle body side so as to support the screen; an attachment adjustment member provided between the screen stay and the screen; and a bolt with which the screen is fastened to the vehicle body side, wherein the screen stay includes a pair of upper and lower stay side attachment holes allowing selection of an attachment position of the screen from upper and lower positions, the attachment adjustment member includes an adjustment member side attachment hole and a protruding portion provided at an interval identical to an interval between the pair of upper and lower stay side attachment holes, the protruding portion is engaged with one of the pair of upper and lower stay side attachment holes, and the bolt is fastened to a nut member through the bolt through hole of the screen and the adjustment member side attachment hole, the nut member provided on the screen stay side.

With this arrangement, the screen is selectively attached to the screen stay in an upper or lower position, and the attachment hole in the screen stay can be hidden. Furthermore, the attachment adjustment member is only required to have a minimum length necessary to hide the attachment hole in the screen stay. Accordingly, the degree of freedom in design can be enhanced as compared with the conventional example. Moreover, the attachment adjustment member is fastened by the bolt or the like through each of the upper and lower attachment holes of the screen while being prevented by the protruding portion from rotating. Thus, the attachment adjustment member can be fixed while being prevented from rotating without an increase in the number of components.

Preferably, the protruding portion of the attachment adjustment member has a larger outer diameter than the stay side attachment holes and is temporarily fixable to either one of the stay side attachment holes with an interference fit.

The attachment adjustment member needs to be fixed to the screen stay in advance of attachment of the screen to the vehicle body, but with this arrangement, the attachment adjustment member can be temporarily fixed to the screen stay by pushing and inserting the protruding portion into the attachment hole of the screen stay with an interference fit. Thus, the assembly workability can be improved.

In a preferred form, the nut member includes: an elastic cylindrical shaft portion of a cylindrical shape made of an elastic member, an elastic flange portion configured to extend radially outward from one end of the elastic cylindrical shaft portion, and a nut integrally embedded in the other end of the elastic cylindrical shaft portion; the elastic cylindrical shaft portion of the nut member is inserted through one of the stay side attachment holes from the adjustment member side attachment hole, and the elastic flange portion of the nut member is housed in a step portion formed around the adjustment member side attachment hole and recessed from a surface of the attachment adjustment member on a front side.

Since fastening is performed while the elastic flange portion of the nut member is housed in the step portion, the fastening can be performed while the amount of fastening of the elastic flange portion is kept constant by the step portion.

In a preferred form, the surface of the attachment adjustment member on the front side is provided with a groove portion along a longitudinal direction of the attachment adjustment member.

With this arrangement, the groove portion is provided along a longitudinal direction of the attachment adjustment member on the front surface of the attachment adjustment member. Thus, it is possible to reduce the attachment adjustment member in weight while increasing the flexibility thereof by reducing the rigidity thereof. Thus, the assembly workability of the attachment adjustment member can be improved.

Preferably, the pair of upper and lower stay side attachment holes serves as a single attachment base, and such a single attachment base is provided at each of upper left and right positions and lower left and right positions of the screen stay.

Thus, the attachment base formed of the upper and lower pair of stay side attachment holes is provided to the upper left and right positions and lower left and right positions of the screen stay, and so it is possible to rigidly support the screen by use of multiple point attachment in which the screen is attached by using the attachment bases.

Preferably, in a surface of the attachment adjustment member that faces the screen stay, a portion of the surface between the adjustment member side attachment hole and the protruding portion is formed to be flat, and in a surface of the screen stay that faces the attachment adjustment member, a portion of the surface between the upper and lower pair of two stay side attachment holes is formed to be flat.

With this arrangement, the seating surfaces of the attachment adjustment member and the screen stay during attachment are flat, and so the seating surfaces can be made stable.

A preferred embodiment of the invention will now be described by way of example only and with reference to the accompanying drawings, in which:
Fig. 1 is a side view showing a left side front portion of a vehicle body of a motorcycle;
Fig. 2 is a side view showing an area around a screen in an enlarged manner;
Fig. 3 is a front view of the screen in a low attachment position;
Fig. 4 is a front view of the screen in a high attachment position;
Fig. 5 is a front view of a screen stay;
Fig. 6 is a cross-sectional view taken along the line 6-6 in Fig. 4;
Fig. 7 is an exploded attachment view of the screen and screen stay;
Figs. 8 are explanatory diagrams of an attachment adjustment member; and
Figs. 9 are explanatory diagrams of a nut member.

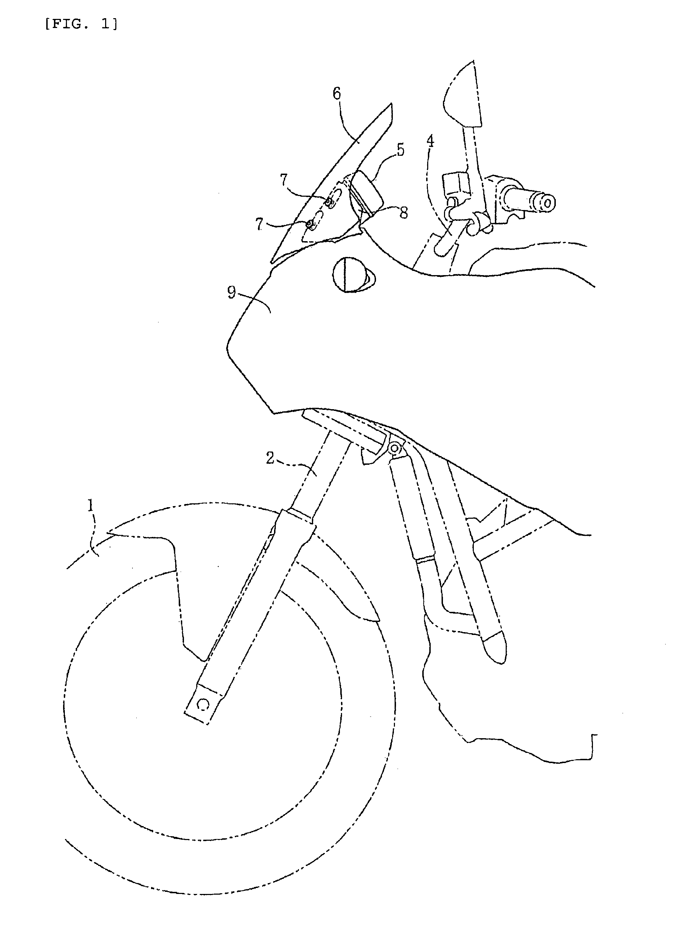

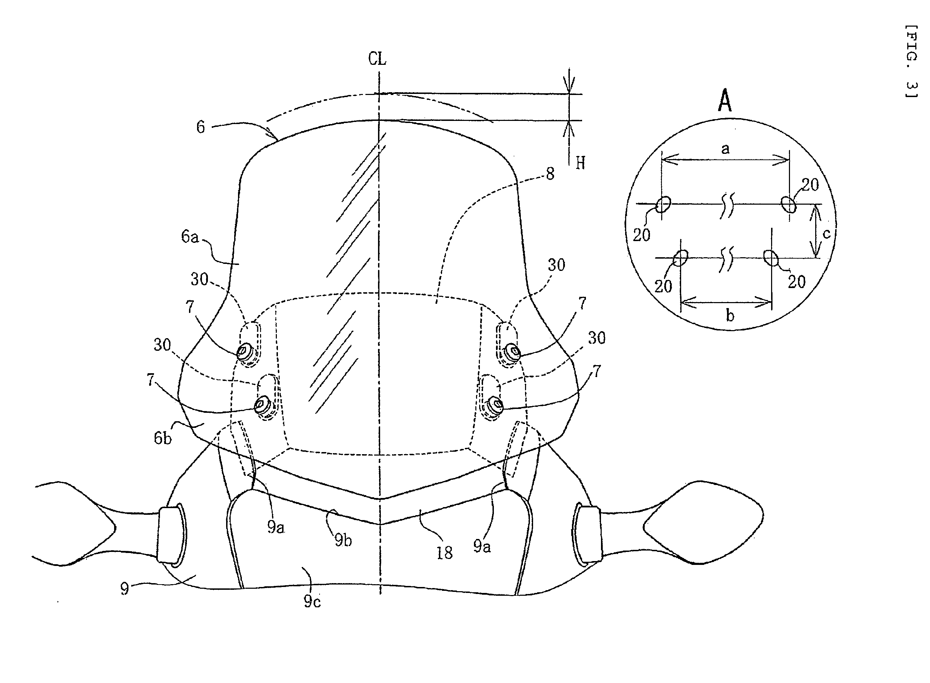

Hereinafter, a description will be given of a currently preferred example embodiment on the basis of the drawings. This example is applied to a motorcycle, that is, a form of a saddle riding type vehicle. Note that, the front-rear, up-down and left-right directions are based on the vehicle when in use. The front-rear and up-down directions are defined using the illustrated state of Fig. 1 as a basis, and the left-right direction is defined using the illustrated state of Fig. 3 as a basis.

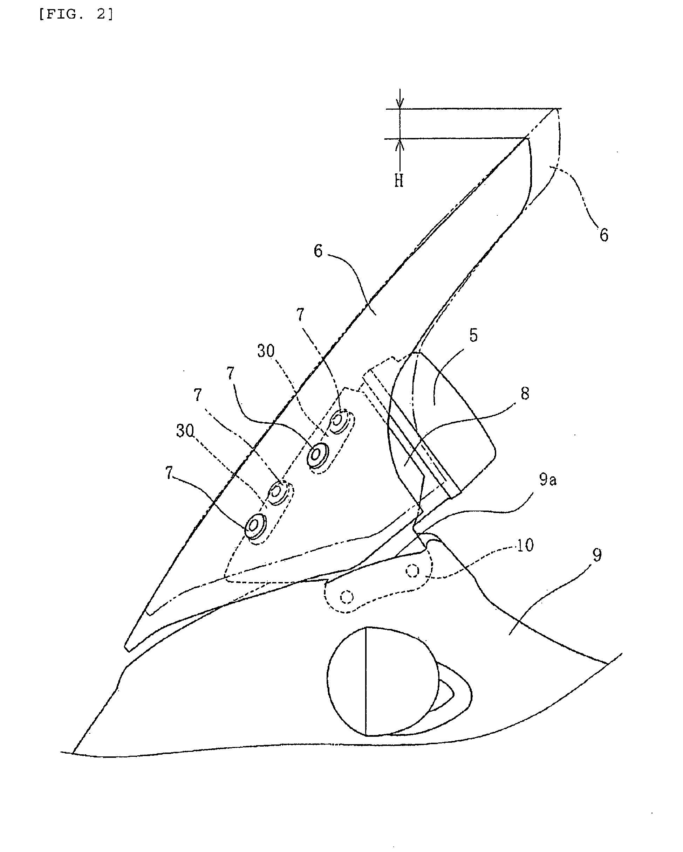

Fig. 1 shows a left side front portion of a vehicle body of the motorcycle, and Fig. 2 further shows an area around a screen in an upper portion of the motorcycle. In these drawings, front forks 2, which support a front wheel 1, are rotatably supported by a vehicle body frame (not shown in the drawings) and steered by a handlebar 4 via a handle shaft 3.

A meter 5 is placed in front of the handlebar 4, and a screen 6 is provided further in front of the meter 5. The screen 6 is a windshield system made of transparent resin or the like and extends above the meter 5 and the handlebar 4 and is positioned in front of the face of a rider or operator (not shown).

The screen 6 is attached to a screen stay 8 by bolts 7. The attachment position of the screen 6 is adjustable in height by changing the attachment position of the screen 6 between a high position and a low position by means of attachment adjustment members 30. There is a difference H in height between the high position and the low position. The adjustment of the attachment position will be described later in more detail.

The screen stay 8 is positioned between the screen 6 and the meter 5, is made of an material having appropriate rigidity such as resin or metal, and is attached to a front end portion of a front cowl 9 as an attachment member for the screen 6. The screen stay 8 also serves as a meter visor and is an exterior member that covers the inner side of a lower portion of the screen 6 in front of the meter 5 and that is visible from a front of the vehicle through the screen 6.

The front cowl 9 is made of resin having rigidity and is an exterior member that covers the left and right and front of the vehicle body. Vehicle body side attachment portions 10, which protrude downward integrally from lower portions of side surfaces of the screen stay 8, overlap inner sides of upper portions 9a on side surfaces of the front cowl, respectively. The screen stay 8 is attached to the upper portions 9a of the front cowl 9 by fastening the aforementioned overlapped portions by bolts or the like.

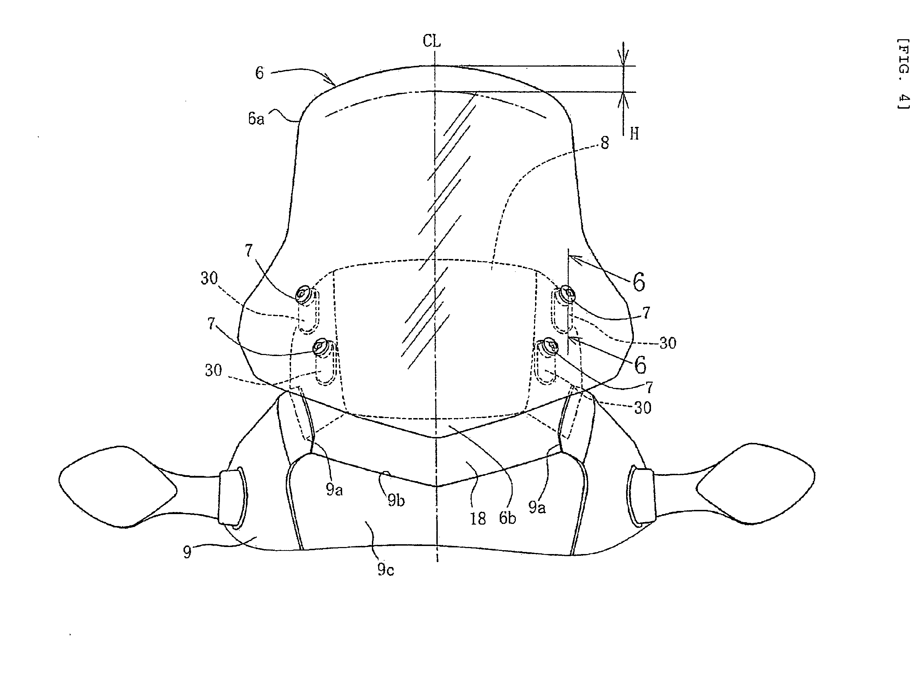

Fig. 3 and Fig. 4 are front views each showing an area around the screen 6 from the front. Here, Fig. 3 shows a low attachment state of the screen and Fig. 4 shows a high attachment state of the screen. As will be described later in detail, the screen 6 can be converted, by simple adjustment structure and operation, between the low attachment state where the screen 6 is attached in a lower position as shown in Fig. 3, and the high attachment state where the screen 6 is attached in an upper position as shown in Fig. 4. In accordance with the conversion between the attachment states, the height of the apex (the centre of the upper end portion in the direction of width of the vehicle) of the screen 6 changes in the up-down direction by the difference H. Here, the height of the screen 6 refers to the ground height and the difference H means the dimension of the difference in height.

As shown in the drawings, a lower portion 6b, which is relatively wide and overlaps the handlebar 4, and an upper portion 6a, which has a smaller width than the lower portion 6b and extends upward, integrally form the screen 6. The screen stay 8 overlaps the inner side of the lower portion 6b of the screen 6, and the left-right width of the screen stay 8 is smaller than the left-right width of the lower portion 6b. Specifically, the screen 6 is wider than the screen stay 8 and covers the front of the rider.

The left-right lower portions of the screen stay 8 respectively serve as the vehicle body side attachment portions 10. The upper portions 9a of the front cowl 9 to which the vehicle body side attachment portions 10 are attached are formed in such a manner as to partially protrude upward from the left-right upper portions of the front cowl 9 and thus to overlap outside the vehicle body side attachment portions 10, respectively. Thus, the vehicle body side attachment portions 10 are detachably attached to the front cowl 9 at the overlapped portions by appropriate connection means.

A front opening 9c is formed in a front surface of the front cowl 9, and an upper portion of an edge portion of the front surface that surrounds the front opening 9c forms an upper edge portion 9b, which connects the left-right upper portions 9a, and a slight gap 18 is formed between the upper edge portion 9b and the lower edge of the lower portion 6b. The lower end of the screen stay 8 is located above the gap 18.

The screen 6 is attached to the screen stay 8 from the front direction of the vehicle body at the left and right of the lower portion 6b by the bolts 7 at two upper and lower positions in each of the left and right positions. The area shown as a circled portion A in Fig. 3 illustrates the arrangement of bolt through holes 20, which are formed in the screen 6 for inserting the bolts 7 therethrough, respectively. The bolt through holes 20 provided at each of the two left and right positions can be considered as a pair, each pair consisting of bolt through holes in upper and lower positions. Thus, a total of four bolt through holes 20 are provided.

The paired bolt through holes 20 at each of the upper and lower positions are symmetric with respect to a vehicle body centreline CL, and an interval a between the paired bolt through holes 20 at the upper position is larger than an interval b between the paired bolt through holes 20 at the lower position (a > b). In addition, the bolt through holes 20 at the upper position and the bolt through holes 20 at the lower position are apart from each other, and a predetermined interval c is formed therebetween.

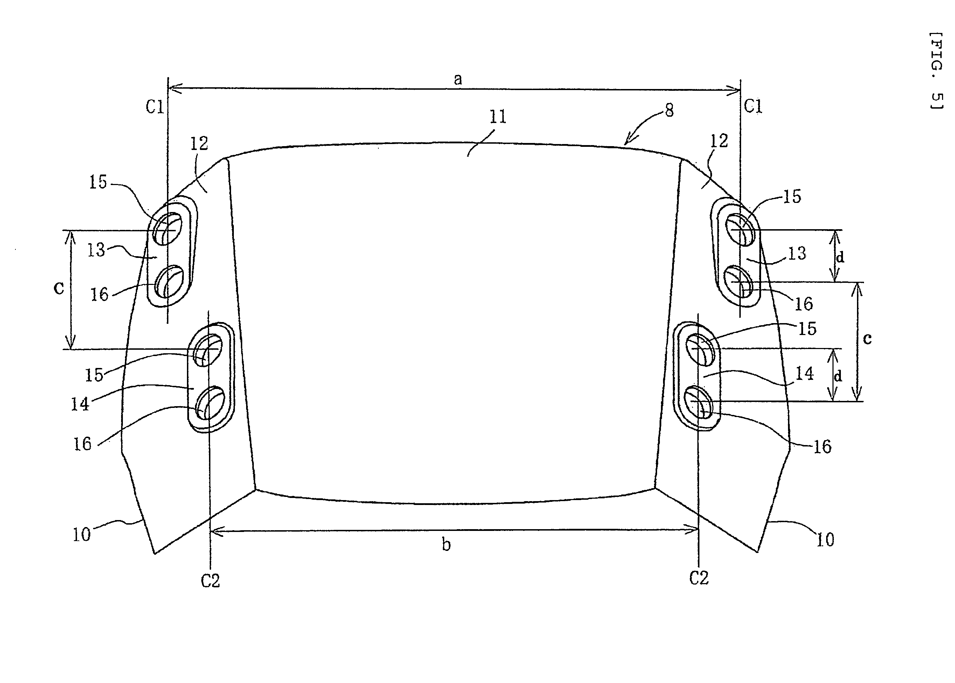

Fig. 5 is a front view of the screen stay 8. As shown in Fig. 5 as well as Fig. 3 and Fig. 4, the screen stay 8 is a relatively rigid member made of resin or metal that forms a substantially trapezoidal shape which is wide in a lateral direction in a front view. In the screen stay 8, side surface portions 12 which are bent obliquely rearward are formed respectively on the left and right sides of a centre portion 11. An upper attachment base 13 and a lower attachment base 14 are provided at upper and lower positions in each of the left and right side surface portions 12. To put it differently, the upper attachment bases 13 are provided as a left-right pair and the lower attachment bases 14 are also provided as a left-right pair. Thus, a total of four attachment bases are provided in the upper left, lower left, upper right and lower right positions of the screen stay 8.

The upper attachment bases 13 and the lower attachment bases 14 are formed in such a manner as to slightly protrude forward from normal surfaces of the side surface portions 12, and the respective surfaces of the upper attachment bases 13 and the lower attachment bases 14 at the front side of the vehicle body are each formed in a flat and oval shape elongated in the up-down direction. In addition, an upper attachment hole 15 and a lower attachment hole 16, which form stay side attachment holes with a predetermined interval therebetween, are formed in each of the upper and lower attachment bases 13 and 14 while penetrating through the surface thereof. The upper attachment hole 15 and the lower attachment hole 16 have the same diameter and are formed in each of the upper and lower attachment bases 13 and 14 as an upper and lower pair. Although the upper attachment bases 13 and the lower attachment bases 14 are formed in the same shape, the upper attachment bases 13 are each arranged while being shifted in the front-rear direction so as to be located slightly to the rear of the lower attachment base 14. Moreover, an upper end portion of each of the upper attachment bases 13 overlaps an upper corner portion.

Note that the screen stay 8 is symmetric in a front view, and the upper attachment bases 13 and their upper and lower attachment holes 15 and 16 are positioned at the same height, while the lower attachment bases 14 and their upper and lower attachment holes 15 and 16 are positioned at the same height. Moreover, the left-right intervals between the upper attachment holes 15 and lower attachment holes 16 of the left and right upper attachment bases 13 are the same, while the left-right intervals between the upper attachment holes 15 and lower attachment holes 16 of the left and right lower attachment bases 14 are the same.

Specifically, when the centrelines passing through the upper attachment holes 15 and the lower attachment holes 16 of the attachment bases are set to C1 and C2, the interval between the centrelines C1 of the left-right upper attachment bases 13 is set to a, the interval between the centrelines C2 of the left-right lower attachment bases 14 is set to b, and the interval between the upper attachment base 13 and the lower attachment base 14 (distance between the centres of the upper attachment holes 15 or the lower attachment holes 16 of the attachment bases) in each of the left-right surfaces is set to c. The dimensions of a, b, and c correspond to the dimensions shown in the circled portion A in Fig. 3. In addition, the interval between the centres of the upper attachment hole 15 and the lower attachment hole 16 in each of the bases is set to d. The interval d is set such that the difference H is given as the change in height when the screen 6 is attached to the screen stay 8 at the interval d.

As described above, the arrangement intervals a, b, and c of the bolt through holes 20 of the screen 6 are the same as with the arrangement intervals a, b, and c of the upper attachment holes 15 or the lower attachment hole 16 of the attachment bases. Thus, the four bolt through holes 20 provided to the screen 6 can be selectively aligned with the upper attachment holes 15 or the lower attachment holes 16 of the attachment bases. Specifically, when the screen 6 is superposed on the screen stay 8 and one of the bolt through holes 20 is aligned with an upper attachment hole 15, for example, of the corresponding attachment base, for example, the other three bolt through holes 20 are aligned with the corresponding upper attachment holes 15. On the other hand, when one of the bolt through holes 20 is aligned with a lower attachment hole 15, all the four bolt through holes 20 are aligned with the four lower attachment holes 16.

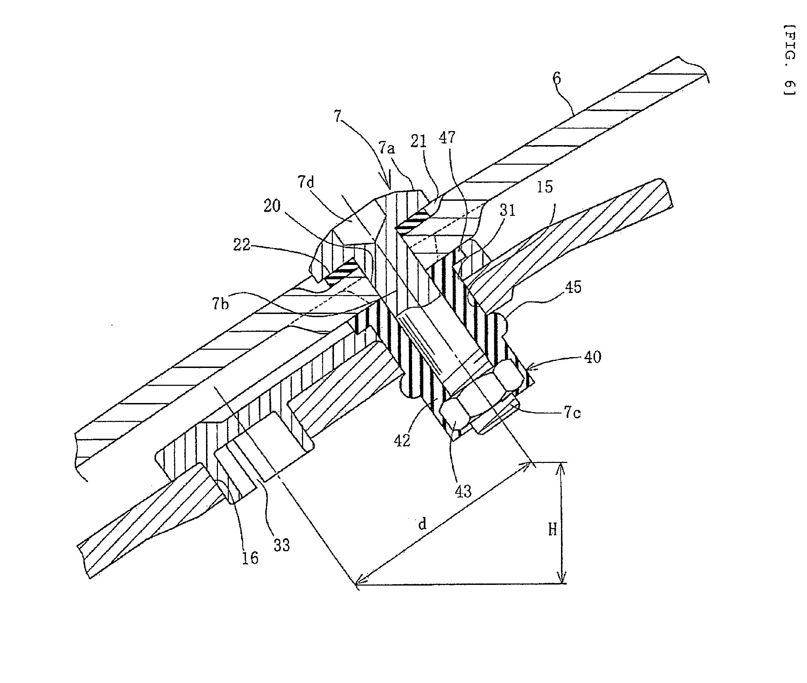

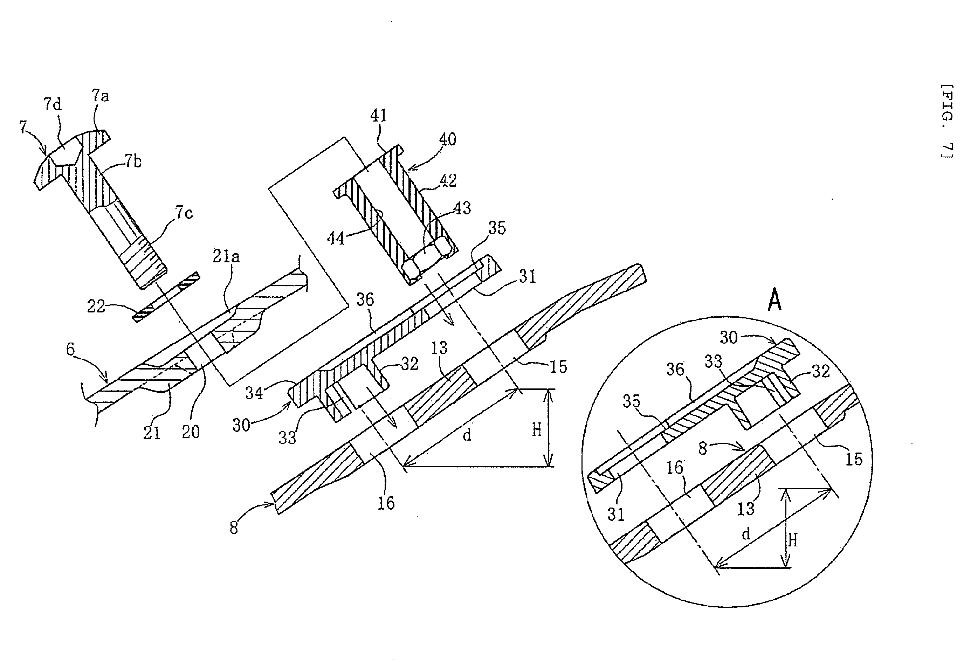

Fig. 6 is a cross-sectional view taken along the line 6-6 in Fig. 4. Fig. 7 is an exploded view showing the attachment portion of the screen 6 and the screen stay 8 by the bolt 7 in the cross-section of Fig. 6 in a disassembled state.

These drawings show an attachment state at an upper left side portion of the screen stay when the screen 6 is attached in a high attachment state (Fig. 4). In this state, the screen 6 is superposed on the upper attachment base 13 via an attachment adjustment member 30, and the bolt through hole 20 of the screen 6 is aligned with the upper attachment hole 15 of the upper attachment base 13. Then, the screen 6 is attached to the screen stay 8 by fastening the bolt 7 inserted through the bolt through hole 20 of the screen 6 via a rubber washer 22 with a nut 43 of a nut member 40, which is penetrated and inserted through the upper attachment hole 15 of the upper attachment base 13 from the attachment adjustment member 30 in advance.

Note that the screen stay 8 is attached to the vehicle body in a rearwardly inclined state as illustrated in the drawings, and the upper attachment hole 15 and the lower attachment hole 16 are spaced from each other in the up-down direction along the included surface by the interval d. This interval d causes the difference H in height between the upper attachment hole 15 and the lower attachment hole 16.

Attachment bases 21 through which the bolt through holes 20 respectively penetrate and which protrude rearward from the front side of the screen 6 are formed on the screen 6. The front side of each of the attachment bases 21 is formed as an attachment recessed portion 21 a, which is recessed rearward. The rubber washer 22 is placed in the attachment recessed portion 21 a. The rubber washer 22 has a centre hole of a diameter substantially identical to that of the bolt through hole 20 and is interposed between a top portion 7a of the bolt 7 and the bottom of the attachment recessed portion 21 a and thus serves as an anti-rattle washer.

The bolt 7 includes a top portion 7a, which has a large diameter, and a shaft portion 7b, which has a smaller diameter than the top portion 7a and is inserted through the bolt through hole 20. In addition, a screw thread 7c is formed on a leading end side of the shaft portion 7b. A hexagon socket 7d, into which a tool can be fitted at the time of fastening, is formed in the top portion 7a.

The attachment adjustment member 30 is a member used for adjusting the height of the screen 6 and includes an adjustment member side attachment hole 31 and a protruding portion 32. The distance between the centres of the adjustment member side attachment hole 31 and the protruding portion 32 coincides with the interval d corresponding to the distance between the centres of the upper attachment hole 15 and the lower attachment hole 16. The adjustment member side attachment hole 31 has the same diameter as the upper attachment hole 15 and the lower attachment hole 16, and the diameter is larger than that of the bolt through hole 20. The protruding portion 32 has substantially the same diameter as the upper attachment hole 15 and the lower attachment hole 16 and can be fitted into either of the upper attachment hole 15 and the lower attachment hole 16 by pushing the protruding portion 32 into the hole.

In the example of the high attachment state, when the protruding portion 32 is fitted into the lower attachment hole 16 by being pushed into the hole, the adjustment member side attachment hole 31 is superposed on the upper attachment hole 15, and the lower attachment hole 16 is hidden by the attachment adjustment member 30 so as not to be externally visible. In addition, the protruding portion 32 is used for positioning on the upper attachment hole 15. Here, one attachment adjustment member 30 is used respectively for each of the left and right upper and lower attachment bases 13 and 14, that is, four attachment adjustment members 30 are used in total.

The nut member 40 is inserted from an upper direction of the drawings through the adjustment member side attachment hole 31 and the upper attachment hole 15 which are superposed in the up-down direction. The nut member 40 includes: an elastic flange portion 41; an elastic cylindrical shaft portion 42, which is elastically deformable; and a nut 43, which is integrally embedded at a lower end of the shaft portion 42 of the nut member 40. The elastic cylindrical shaft portion 42 (before fastening) has a constant thickness in the shaft direction and has an outer diameter such that it can be inserted through the adjustment member side attachment hole 31, which is formed in the attachment adjustment member 30, and the upper attachment hole 15. The elastic cylindrical shaft portion 42 includes a shaft hole 44, which has substantially the same diameter as the bolt through hole 20.

The elastic cylindrical shaft portion 42 is configured to partially elastically deform in such a manner as to radially expand in a direction orthogonal to the shaft and thus to form an enlarged portion 45. The enlarged portion 45 is formed in the following manner. The elastic cylindrical shaft portion 42 is inserted through the adjustment member side attachment hole 31 and the upper attachment base 13 in a state where the attachment base 21 of the screen 6 is superposed on the attachment adjustment member 30 and the bolt through hole 20 is aligned with an upper end opening of the shaft hole 44 in the drawings. Then, the shaft portion 7b of the bolt 7 is inserted into the shaft hole 44 and fastened with the nut 43. The nut 43 moves toward the flange portion 41 and compresses the shaft portion 42, causing it to bulge outward to form enlarged portion 45. Thus, the screen 6, the attachment adjustment member 30 and the screen stay 8 can be held between the enlarged portion 45 and the top portion 7a of the bolt.

The attachment method will now be described with reference to Fig. 7. First, each of the left and right attachment adjustment members 30 is arranged with the adjustment member side attachment hole 31 located at the upper end and with the protruding portion 32 located at the lower end. Then, the protruding portion 32 is pushed into the lower attachment hole 16 and is adjusted in an interference fit by positioning the adjustment member side attachment hole 31 exactly on the upper attachment hole 15. In this state, the attachment adjustment member 30 is temporarily fixed. As a result, the attachment adjustment members 30 are attached onto the screen stay 8 while being prevented from rotating. Then, the elastic cylindrical shaft portion 42 of the nut member 40 is inserted through the adjustment member side attachment hole 31 and the upper attachment hole 15 to cause the leading end portion of the elastic cylindrical shaft portion 42, which includes the nut 43, to protrude on the back side (lower side in the drawings) of the screen stay 8. Thereafter, the screen 6 is superposed on the screen stay 8, and the attachment bases 21 are aligned with the adjustment member side attachment holes 31, respectively.

Subsequently, the shaft portion 7b of the bolt 7 is inserted into the shaft hole 44 of the nut member 40 in a state where the rubber washer 22 has previously been put on the bolt through hole 20. When the bolt 7 is fastened with the nut 43 in this state, the portion of the elastic cylindrical shaft portion 42 of the nut member 40 that protrudes on the back side of the screen stay 8 is compressed upward in the shaft direction and thus forms the enlarged portion 45 by elastically deforming (Fig. 6). The enlarged portion 45 comes into pressure contact with the back side of the screen stay 8. Thus, the screen 6, the attachment adjustment member 30 and the screen stay 8 are held together between the top portion 7a of the bolt 7 and the enlarged portion 45 of the nut member 40 and thereby fixed.

Here, the enlarged portion 45 is a part of the elastic member. Thus, when pressed against the screen stay 8, the enlarged portion 45 prevents occurrence of abnormal noise in the contact portion with the screen stay 8 and can be attached elastically while serving as a locking member. In addition, the rubber washer 22 prevents rattling between the bolt 7 and the screen 6 and thereby prevents vibration. Moreover, since the attachment adjustment members 30 can be temporarily fixed to the screen stay 8 before the screen 6 is superposed, the workability is improved.

Note that, the attachment adjustment members 30 can be attached the other way up, and thereby, the attachment height of the screen 6 is adjustable. This state is shown in a circled portion A in Fig. 7. Specifically, the attachment adjustment members 30 are turned the other way round, so that the adjustment member side attachment holes 31 are aligned with the lower attachment holes 16, while the protruding portions 32 are fitted into the upper attachment holes 15, respectively. Thus, the screen 6 is attached through the lower attachment holes 16. Here, the lower attachment holes 16 through which the screen 6 is attached are shifted downward from the upper attachment holes 15 by the dimension corresponding to the interval d. Thus, the attachment height is lowered by the difference H. Accordingly, when the screen 6 is attached through the lower attachment holes 16 of the screen stay 8 by the bolts 7, the screen 6 is attached while the attachment position is lowered by the difference H, and thus set in the low attachment state shown in Fig. 3. Accordingly, it is possible to freely change the screen 6 between the low attachment state shown in Fig. 3 and the high attachment state shown in Fig. 4 by only flipping the attachment adjustment members 30 round, and thus to adjust the height by the difference H in height between the high and low attachment states.

In addition, as shown in Fig. 6 and Fig. 7, among the surface of each of the attachment adjustment members 30 that faces the screen stay 8, the surface between the adjustment member side attachment hole 31 and the protruding portion 32 is formed in a flat shape, and among the surface of the screen stay 8 that faces the attachment adjustment member 30, the surface between the upper attachment hole 15 and the lower attachment hole 16, which are the two stay side attachment holes forming an upper and lower pair, is formed in a flat shape. These flat surfaces respectively serve as seating surfaces for the counterparts of the attachment adjustment member 30 and the screen stay 8. Thus, when the attachment adjustment member 30 is superposed and attached onto the screen stay 8, the attachment adjustment member 30 and the screen stay 8 can be superposed with each other on the flat seating surfaces, and so the seating surfaces can be made stable. Note that, when the attachment adjustment member 30 is attached the other way up as shown in the circled portion A in Fig. 7, the attachment adjustment member 30 and the screen stay 8 can be superposed with each other on the flat seating surfaces.

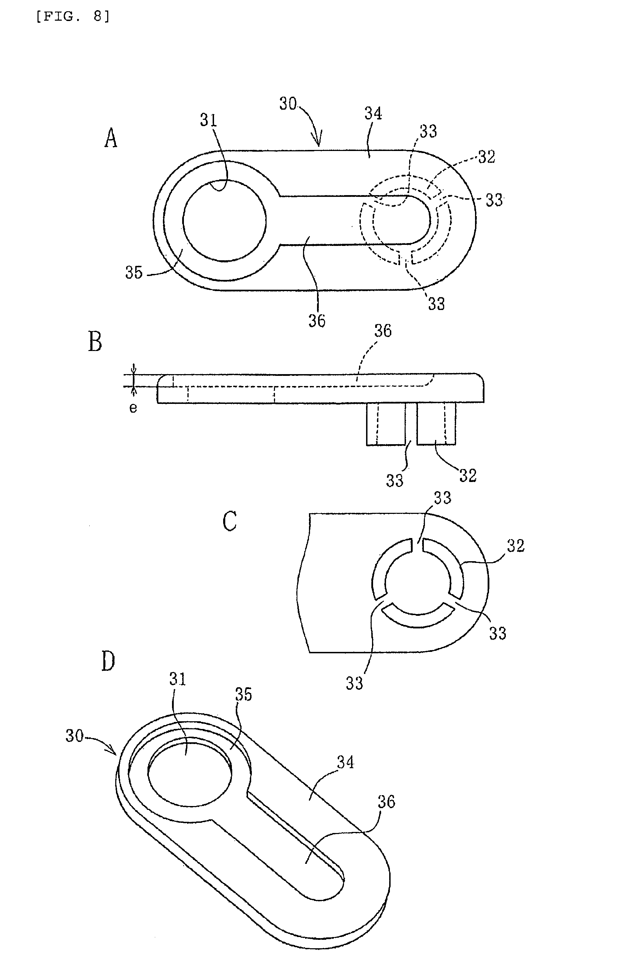

Fig. 8 shows the attachment adjustment member 30 in detail. Fig. 8A is a plan view, Fig. 8B is a front view, Fig. 8C is a back side view of the protruding portion 32, and Fig. 8D is a perspective view. In the drawings, the attachment adjustment member 30 is a relatively small member made of an appropriate material such as resin. In the attachment adjustment member 30, the adjustment member side attachment hole 31, which is superposed on the upper attachment hole 15 or the lower attachment hole 16, and the protruding portion 32 are formed, respectively, at the lengthwise ends of a main body portion 34. The main body portion 34 has substantially the same oval shape as the upper attachment base 13 and the lower attachment base 14.

The adjustment member side attachment hole 31 is superposed on one of the upper attachment hole 15 and the lower attachment hole 16 and is a through hole having a diameter larger than the upper attachment hole 15 and the lower attachment hole 16 so as to allow the elastic cylindrical shaft portion 42 to be inserted therethrough. The protruding portion 32 forms a hollow boss integrally protruding from the back surface (the surface facing the screen stay 8) of the attachment adjustment member 30 so as to be tightly fitted into one of the upper attachment hole 15 and the lower attachment hole 16. In addition, as shown in Figs. 8B and 8C, slits 33 are provided in the protruding portion 32 so as to allow the protruding portion 32 to be tightly fitted into the upper attachment hole 15 or the lower attachment hole 16.

A number of the slits 33 that are appropriate to the protruding portion 32, e.g., three slits 33 at intervals of 120 degrees in the circumferential direction, are formed in parallel to the protruding direction, and the leading end portions of the slits 33 are opened. The protruding portion 32 is formed with an outer diameter larger than the hole diameter of each of the upper attachment hole 15 and the lower attachment hole 16. Accordingly, when pushed into the lower attachment hole 16, the protruding portion 32 is pushed into the lower attachment hole 16 while elastically deforming with interference because of the presence of the slits 33. Thus, the attachment adjustment member 30 can be temporarily fixed to the screen stay 8 while being prevented from rotating because of the presence of the slits 33. Note that, the protruding portion 32 is not limited to the above described shape, and various shapes can be used. The peripheral wall of the protruding portion 32 may be formed in a tapered shape, for example. In this case, the attachment is made easier. Moreover, the protruding portion 32 may be formed as a solid body.

A step portion 35 is provided around the adjustment member side attachment hole 31 on the front surface side of the attachment adjustment member 30 that is positioned at the front side of the vehicle body at the time of attachment of the attachment adjustment member 30, and the elastic flange portion 41 is fitted into the step portion 35. The step portion 35 is a step shaped recess portion recessed from the surface of the main body portion 34 with a dimension smaller than the thickness of the elastic flange portion 41. Thus, when the elastic flange portion 41 is fitted into the step portion 35, the surface of the elastic flange portion 41 protrudes from the surface of the main body portion 34 and comes in contact with the screen 6, thereby preventing the main body portion 34 from coming in contact with the screen 6. Thus, the interference is secured.

A long groove 36 is formed in the longitudinal direction between the step portion 35 and a portion equivalent to a region above the protruding portion 32 on the front surface side of the attachment adjustment member 30. The long groove 36 is a recessed portion recessed from the surface of the main body portion 34 with a depth substantially identical to that of the step portion 35. The long groove 36 reduces the attachment adjustment member 30 in weight and also improves the attachment properties by increasing flexibility.

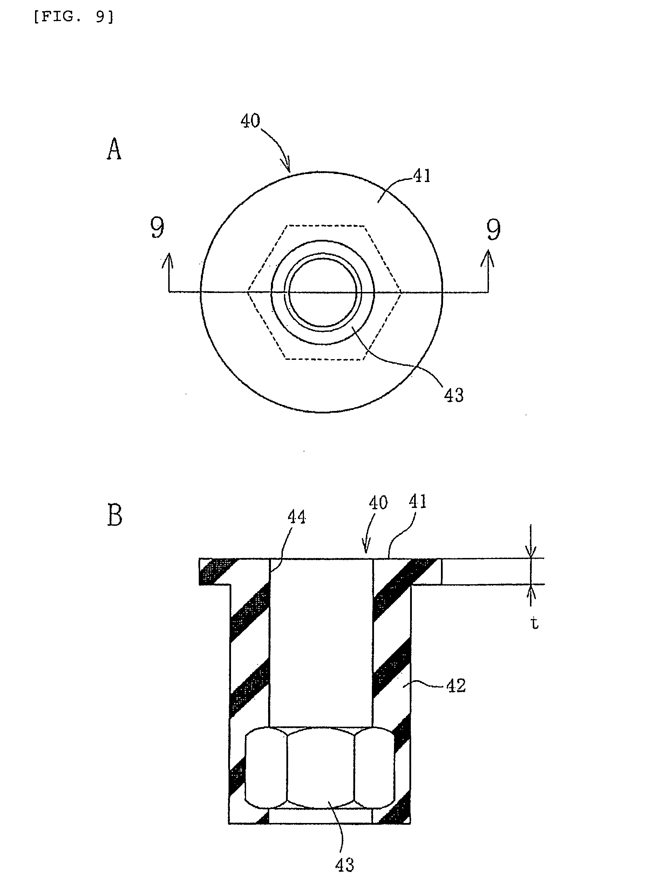

Figs. 9 show the nut member 40 in detail. Fig. 9A is a plan view, and Fig. 9B is a cross-sectional view taken along the line 9-9. The nut member 40 is a soft material with high elasticity such as rubber. In the nut member 40, the elastic flange portion 41, which extends in the direction orthogonal to the shaft, is provided at one end of the elastic cylindrical shaft portion 42, and the nut 43 is inserted at the other end thereof. In this state, the nut member 40 is formed as a single body. In addition, since the shaft hole 44, which penetrates through the shaft centre portion, is formed, the nut member 40 is formed in a tubular shape and thus serves as a flanged collar.

In addition, the nut 43 is integrally put on the shaft end of the elastic cylindrical shaft portion 42, which is the side opposite to the elastic flange portion 41. Thus, an intermediate portion of the elastic cylindrical shaft portion 42 in the shaft direction is elastically deformed so as to protrude outward when the bolt 7 inserted into the through hole 44 from the elastic flange portion 41 side is screwed into the nut 43.

Moreover, the elastic flange portion 41 is elastically deformable as a result of fastening with the bolt 7 because a thickness t of the elastic flange portion 41 is set to be larger than a depth e (refer to Fig. 8B) of the step portion 35 in the attachment adjustment member 30. Moreover, since the elastic flange portion 41 is housed in the step portion 35, the attachment base 21 of the screen 6 comes in contact with the step portion 35 during fastening with the bolt 7. Thus, the fastening can be performed while the amount of fastening of the elastic flange portion 41 is kept constant by the step portion 35.

Next, the height adjustment of the screen 6 will be described. First, in order to set the high attachment state shown in Fig. 4, the protruding portions 32 of the attachment adjustment members 30 are fitted into the lower attachment holes 16 of the corresponding attachment bases while the adjustment member side attachment holes 31 are aligned with the upper attachment holes 15, and the nut members 40 are inserted from the adjustment member side attachment hole 31 as shown in Fig. 6 and Fig. 7. Furthermore, the screen 6 is superposed on the screen stay 8, and the bolt through holes 20 are aligned with the adjustment member side attachment holes 31 (opening end portions of the shaft holes 44). Then, the bolts 7 are inserted into the shaft holes 44 of the nut members 40 from the bolt through holes 20 via the rubber washers 22 and then fastened with the nuts 43, respectively. Thus, the screen 6 is attached in the high attachment state shown in Fig. 4.

Next, in order to set the low attachment state shown in Fig. 3, as shown in the circled portion A in Fig. 7, the attachment adjustment members 30 are turned round down, so that the adjustment member side attachment holes 31 are aligned with the lower attachment holes 16 while the protruding portions 32 are fitted into the upper attachment holes 15. Thereafter, the nut members 40 are attached and fastened by the bolts 7 with the nuts 43 in the same manner as the high attachment state. In this case, the screen 6 is attached through the lower attachment holes 16. Thus, the screen 6 is in the low attachment state in Fig. 3 and is thus located at a position lower than the high attachment state in Fig. 4 by the difference H.

As described above, according to the present embodiment, the screen 6 can be selectively attached to the upper or lower position of the screen stay 8, and the attachment holes not used in attachment among the upper attachment holes 15 and the lower attachment holes 16, which are provided to the screen stay 8, can be hidden by the main body portions 34 of the attachment adjustment members 30.

Furthermore, the attachment adjustment members 30 are each only required to have a minimum length necessary to hide the upper attachment hole 15 or the lower attachment hole 16 in the screen stay 8. Accordingly, the attachment adjustment members 30 can be relatively small in size, and the degree of freedom in design can be enhanced. Moreover, the attachment adjustment members 30 are each fastened by the bolt 7 through one of the upper attachment hole 15 and the lower attachment hole 16 provided to the upper attachment base 13 and the lower attachment base 14 of the screen stay 8, while the other end of the attachment adjustment member 30 is prevented by the protruding portion 32 from rotating. Thus, the attachment adjustment members 30 can be fixed while being prevented from rotating without an increase in the number of components.

In addition, when the screen 6 is attached to the vehicle body, the attachment adjustment members 30 can be temporarily fixed to the screen stay 8 by inserting the protruding portions 32 through the upper attachment holes 15 or the lower attachment holes 16 of the screen stay 8 with an interference fit by pushing the protruding portions 32 into the holes. Thus, since the attachment adjustment members 30 can be fixed to the screen stay 8 in advance, the assembly workability can be improved.

Furthermore, the long groove 36 is provided to each of the attachment adjustment members 30. Thus, it is possible to reduce the mass of the attachment adjustment member 30 while increasing the flexibility thereof by reducing the rigidity. Thus, the attachment adjustment members 30 can be positioned along the curved surface of the screen stay 8, and the assembly workability of the attachment adjustment members 30 can be improved.

Moreover, the upper attachment bases 13 and the lower attachment bases 14 are provided at a total of four positions of the screen stay 8 (upper left, upper right, lower left and lower right), while each of the upper and lower attachment bases 13 and 14 includes the upper attachment hole 15 and the lower attachment hole 16 as a pair. Thus, it is possible to rigidly support the screen 6 by use of multiple point attachment in which the screen 6 is attached at the upper and lower left and right positions by using the attachment holes in the above described bases.

## Claims

1. A screen attachment structure for a saddle riding type vehicle, comprising:
a screen (6) of a windshield system attached to a front portion of a vehicle body and provided with a bolt through hole (20);
a screen stay (8) attached to the vehicle body side so as to support the screen (6);
an attachment adjustment member (30) provided between the screen stay (8) and the screen (6); and
a bolt (7) with which the screen (6) is fastened to the vehicle body side,
wherein
the screen stay (8) includes a pair of upper and lower stay side attachment holes (15, 16) allowing selection of an attachment position of the screen (6) from upper and lower positions;
said screen attachement structure being **characterized in that** :
the attachment adjustment member (30) includes an adjustment member side attachment hole (31) and a protruding portion (32) provided at an interval identical to an interval between the pair of upper and lower stay side attachment holes (15, 16),
the protruding portion (32) is engaged with one of the pair of upper and lower stay side attachment holes (15, 16), and
the bolt (7) is fastened to a nut member (40) through the bolt through hole (20) of the screen (6) and the adjustment member side attachment hole (31), the nut member (40) provided on the screen stay (8) side.

2. The screen attachment structure for a saddle riding type vehicle, according to claim 1, wherein
the protruding portion (32) of the attachment adjustment member (30) has a larger outer diameter than the stay side attachment holes (15, 16) and is temporarily fixable to either one of the stay side attachment holes (15, 16) with an interference fit.

3. The screen attachment structure for a saddle riding type vehicle, according to any one of claims 1 and 2, wherein
the nut member (40) includes:
an elastic cylindrical shaft portion (42) of a cylindrical shape made of an elastic member;
an elastic flange portion (41) configured to extend radially outward from one end of the elastic cylindrical shaft portion (42); and
a nut (43) integrally embedded in the other end of the elastic cylindrical shaft portion (42),
the elastic cylindrical shaft portion (42) of the nut member (40) is inserted through one of the stay side attachment holes (15, 16) from the adjustment member side attachment hole (31), and
the elastic flange portion (41) of the nut member (40) is housed in a step portion (35) formed around the adjustment member side attachment hole (31) and recessed from a surface of the attachment adjustment member (30) on a front side.

4. The screen attachment structure for a saddle riding type vehicle, according to any one of claims 1 to 3, wherein the surface of the attachment adjustment member (30) on the front side is provided with a groove portion (36) along a longitudinal direction of the attachment adjustment member (30).

5. The screen attachment structure for a saddle riding type vehicle, according to any one of claims 1 to 4, wherein
the pair of upper and lower stay side attachment holes (15, 16) serves as a single attachment base (13, 14), and
such a single attachment base (13, 14) is provided at each of upper left and right positions and lower left and right positions of the screen stay (8).

6. The screen attachment structure for a saddle riding type vehicle, according to any one of claims 1 to 5, wherein
in a surface of the attachment adjustment member (30) that faces the screen stay (8), a portion of the surface between the adjustment member side attachment hole (31) and the protruding portion (32) is formed to be flat, and
in a surface of the screen stay (8) that faces the attachment adjustment member (30), a portion of the surface between the upper and lower pair of two stay side attachment holes (15, 16) is formed to be flat.

## Patentansprüche

1. Struktur zum Anbringen einer Windschutzscheibe für ein Fahrzeug, das rittlings gefahren wird, umfassend:
eine Windschutzscheibe (6) eines Windschutzsystems, die an einem vorderen Abschnitt einer Fahrzeugkarosserie angebracht ist und mit einer Schraubendurchgangsöffnung (20) versehen ist,
eine Windschutzscheibenabstützung (8), die an der Seite der Fahrzeugkarosserie angebracht ist, um die Windschutzscheibe (6) abzustützen,
ein Anbringungsjustierungselement (30), das zwischen der Windschutzscheibenabstützung (8) und der Windschutzscheibe (6) bereitgestellt ist, und
eine Schraube (7), mit der die Windschutzscheibe (6) an der Seite der Fahrzeugkarosserie befestigt ist, wobei
die Windschutzscheibenabstützung (8) ein Paar aus oberen und unteren seitlichen Abstützungsanbringungsöffnungen (15, 16) beinhaltet, die die Auswahl einer Anbringungsposition der Windschutzscheibe (6) aus oberen und unteren Positionen gestattet,
wobei die Struktur zum Anbringen einer Windschutzscheibe **dadurch**
**gekennzeichnet ist, dass**:
das Anbringungsjustierungselement (30) eine seitliche Justierungselement-Anbringungsöffnung (31) und einen hervorstehenden Abschnitt (32) beinhaltet, die in einem Abstand bereitgestellt sind, der identisch mit einem Abstand zwischen dem Paar aus oberen und unteren seitlichen Abstützungsanbringungsöffnungen (15, 16) ist,
wobei der hervorstehende Abschnitt (32) mit einem Element des Paares aus oberen und unteren seitlichen Abstützungsanbringungsöffnungen (15, 16) in Eingriff steht, und
die Schraube (7) durch die Schraubendurchgangsöffnung (20) der Windschutzscheibe (6) und die seitliche Justierungselement-Anbringungsöffnung (31) hindurch an einem Mutterelement (40) befestigt ist, wobei das Mutterelement (40) an der Seite der Windschutzscheibenabstützung (8) bereitgestellt ist.

2. Struktur zum Anbringen einer Windschutzscheibe für ein Fahrzeug, das rittlings gefahren wird, nach Anspruch 1, wobei
der hervorstehende Abschnitt (32) des
Anbringungsjustierungselements (30) einen größeren Außendurchmesser aufweist als die seitlichen Abstützungsanbringungsöffnungen (15, 16) und durch Presssitz vorübergehend an eine der seitlichen Abstützungsanbringungsöffnungen (15, 16) fixierbar ist.

3. Struktur zum Anbringen einer Windschutzscheibe für ein Fahrzeug, das rittlings gefahren wird, nach einem der Ansprüche 1 und 2, wobei
das Mutterelement (40) Folgendes beinhaltet:
einen elastischen zylindrischen Schaftabschnitt (42) mit zylindrischer Form, der aus einem elastischen Element hergestellt ist,
einen elastischen Flanschabschnitt (41), der derart konfiguriert ist, dass er sich von einem Ende des elastischen zylindrischen Schaftabschnitts (42) radial nach außen erstreckt, und
eine Mutter (43), die einstückig in das andere Ende des elastischen zylindrischen Schaftabschnitts (42) eingebettet ist,
wobei der elastische zylindrische Schaftabschnitt (42) des Mutterelements (40) von der seitlichen Justierungselement-Anbringungsöffnung (31) aus durch eine der seitlichen Abstützungsanbringungsöffnungen (15, 16) geführt ist, und
der elastische Flanschabschnitt (41) des Mutterelements (40) in einem Stufenabschnitt (35) untergebracht ist, der um die seitliche Justierungselement-Anbringungsöffnung (31) herum gebildet und von einer Oberfläche auf einer Vorderseite des Anbringungsjustierungselements (30) zurückgesetzt ist.

4. Struktur zum Anbringen einer Windschutzscheibe für ein Fahrzeug, das rittlings gefahren wird, nach einem der Ansprüche 1 bis 3, wobei das Anbringungsjustierungselement (30) an der Vorderseite mit einem Kerbenabschnitt (36) entlang einer Längsrichtung des Anbringungsjustierungselements (30) versehen ist.

5. Struktur zum Anbringen einer Windschutzscheibe für ein Fahrzeug, das rittlings gefahren wird, nach einem der Ansprüche 1 bis 4, wobei
das Paar aus oberen und unteren seitlichen
Abstützungsanbringungsöffnungen (15, 16) als eine einzelne Anbringungsbasis (13, 14) dient, und
eine derartige einzelne Anbringungsbasis (13, 14) jeweils an einer oberen linken und rechten Position und einer unteren linken und rechten Position der Windschutzscheibenabstützung (8) bereitgestellt ist.

6. Struktur zum Anbringen einer Windschutzscheibe für ein Fahrzeug, das rittlings gefahren wird, nach einem der Ansprüche 1 bis 5, wobei
in einer Oberfläche des Anbringungsjustierungselements (30), die der Windschutzscheibenabstützung (8) zugewandt ist, ein Abschnitt der Oberfläche zwischen der seitlichen Justierungselement-Anbringungsöffnung (31) und dem hervorstehenden Abschnitt (32) flach ausgebildet ist und
in einer Oberfläche der Windschutzscheibenabstützung (8), die dem Anbringungsjustierungselement (30) zugewandt ist, ein Abschnitt der Oberfläche zwischen dem oberen und unteren Paar zweier seitlicher Abstützungsanbringungsöffnungen (15, 16) flach ausgebildet ist.

## Revendications

1. Structure de fixation d'écran pour un véhicule du
type à selle, comprenant :
un écran (6) d'un système de pare-brise fixé sur une portion avant d'un corps de véhicule et pourvu d'un trou de boulonnage (20) ;
un étai d'écran (8) fixé au côté du corps du véhicule de manière à supporter l'écran (6) ;
un élément de réglage de fixation (30) prévu entre l'étai d'écran (8) et l'écran (6) ; et
un boulon (7) avec lequel l'écran (6) est fixé au côté
du corps du véhicule,
dans laquelle :
l'étai d'écran (8) comprend une paire de trous de fixation supérieurs et inférieurs (15, 16) côté étai permettant de choisir une position de fixation de l'écran (6) entre des positions supérieure et inférieure ;
ladite structure de fixation d'écran étant caractérisée en ce qui :
l'élément de réglage de fixation (30) comprend un trou de fixation (31) côté élément de réglage et une portion saillante (32) ménagée avec un intervalle identique à celui compris entre les trous de fixation supérieurs et inférieurs (15, 16) côté étai,
la portion saillante (32) est engagée dans l'un de la
paire de trous de fixation supérieurs et inférieurs (15, 16) côté étai, et
le boulon (7) est fixé à un élément d'écrou (40) à
travers le trou de boulonnage (20) de l'écran (6) et le trou de fixation côté élément de réglage (31), l'élément d'écrou (40) étant ménagé du côté de l'étai d'écran (8).

2. Structure de fixation d'écran pour un véhicule du type à selle selon la revendication 1, dans laquelle :
la portion saillante (32) de l'élément de réglage de
fixation (30) a un diamètre externe supérieur à celui des trous de fixation côté étai (15, 16) et peut être fixée momentanément à l'un ou l'autre des trous de fixation côté étai (15, 16) par un joint à ajustement serré.

3. Structure de fixation d'écran pour un véhicule du type à selle selon l'une quelconque des revendications 1 et 2, dans laquelle :
l'élément d'écrou (40) comprend :
une portion d'arbre cylindrique élastique (42) de
forme cylindrique constituée d'un élément élastique ;
une portion de bride élastique (41) configurée pour
s'étendre radialement vers l'extérieur depuis une extrémité de la portion d'arbre cylindrique élastique (42) ;
un écrou (43) noyé d'une pièce dans l'autre extrémité
de la portion d'arbre cylindrique élastique (42),
la portion d'arbre cylindrique élastique (42) de
l'élément d'écrou (40) est insérée à travers l'un des trous de fixation côté étai (15, 16) à partir du trou de fixation côté élément de réglage (31) et
la portion de bride élastique (41) de l'élément
d'écrou (40) est logée dans une portion en gradin (35) formée autour du trou de fixation côté élément de réglage (31) et évidée d'une surface de l'élément de réglage de fixation (30) sur un côté avant.

4. Structure de fixation d'écran pour un véhicule du type à selle selon l'une quelconque des revendications 1 à 3, dans laquelle la surface de l'élément de réglage de fixation (30) sur le côté avant est pourvue d'une portion de rainure (36) le long d'une direction longitudinale de l'élément de réglage de fixation (30).

5. Structure de fixation d'écran pour un véhicule du type à selle selon l'une quelconque des revendications 1 à 4, dans laquelle :
la paire de trous de fixation supérieurs et inférieurs (15, 16) côté étai sert de base de fixation unique (13, 14) et
cette base de fixation unique (13, 14) est prévue dans
chacune des positions gauche et droite supérieures et des positions gauche et droite inférieures de l'étai d'écran (8).

6. Structure de fixation d'écran pour un véhicule du type à selle selon l'une quelconque des revendications 1 à 5, dans laquelle :
sur une surface de l'élément de réglage de
fixation (30) qui est en regard de l'étai d'écran (8), une portion de la surface comprise entre le trou de fixation côté élément de réglage (31) et la portion saillante (32) est conformée pour être plate et
sur une surface de l'étai d'écran (8) qui est en
regard de l'élément de réglage de fixation (30), une portion de la surface comprise entre la paire supérieure et la paire inférieure de deux trous de fixation côté étai (15, 16) est conformée pour être plate.
